# EUROPEAN PATENT APPLICATION

(11) **EP 4 488 920 A1**
(43) Date of publication of application: **08.01.2025**
(21) Application number: 23760163.8
(22) Date of filing: 27.02.2023
(51) Int. Cl.: G06Q 50/04, G06Q 50/12

(54) **FOOD HYGIENE MANAGEMENT DEVICE, FOOD HYGIENE MANAGEMENT SYSTEM, FOOD HYGIENE MANAGEMENT METHOD, AND PROGRAM**

(30) Priority: 28.02.2022 JP 2022029910
(71) Applicant: Panasonic Intellectual Property Management Co., Ltd., Kadoma-shi, Osaka 571-0057 (JP)
(72) Inventor: WADA, Yusuke, Kadoma-shi, Osaka 571-0057 (JP); HARUMOTO, Hideaki, Kadoma-shi, Osaka 571-0057 (JP)
(74) Representative: Novagraaf International SA
(86) International application number: PCT/JP2023/007025
(87) International publication number: WO 2023/163165

(57) **Abstract**

A food hygiene management device according to the present disclosure comprises a core temperature acquisition unit that acquires core temperature information indicating a core temperature of a food, a photograph acquisition unit that acquires photograph data on the food, and a composition unit that generates composed photograph data in which the core temperature information, time information indicating when the core temperature was measured, and the photograph data of the food are displayed.

## Description

### Technical Field

The present disclosure relates to a food hygiene management device, a food hygiene management system, a food hygiene management method, and a program.

### Background Art

Food hygiene management based on HACCP (Hazard Analysis and Critical Control Point) has been carried out. The food hygiene management step based on HACCP requires the recording of food conditions such as core temperature (internal temperature) of cooked food, packaging and labels.

Digital hygiene management based on HACCP has been promoted. For example, PTL 1 discloses a management system in which staff input check results for each item in a predetermined checklist using a smartphone or tablet terminal.

### Citation List

### Patent Literature

PTL 1
Japanese Patent Application Laid-Open No. 2021-174184

### Summary of Invention

### Technical Problem

In food factories where food is prepared and manufactured, it is necessary to carry out hygiene management of a large quantity of food products. In the technology disclosed in PTL 1, staff need to input the results of multiple check items for a large quantity of food products, so even if the labor and time required for each input is small, the overall hygiene control process requires a large amount of labor and time.

In addition, from a hygiene management perspective, there is a demand for a method with which staff do not need to touch a hygiene management device such as a tablet terminal when entering check results.

An object of the present disclosure is to provide a food hygiene management device, a food hygiene management system, a food hygiene management method, and a program that can reduce the labor and time in food hygiene management, and can perform more hygienic hygiene management.

### Solution to Problem

A food hygiene management device of the present disclosure includes: a core temperature acquirer that acquires core temperature information representing a core temperature of food; a photograph acquirer that acquires photograph data of the food; and a combiner that generates composite photograph data that indicates the core temperature information, time information of a time when the core temperature is measured, and photograph data of the food.

A food hygiene management system of the present disclosure includes: a core temperature information generation device that generates core temperature information representing a core temperature of food; a photographic device that takes a photograph of the food; and a food hygiene management device that generates and stores composite photograph data that indicates the core temperature information, time information of a time when the core temperature is measured, and photograph data of the food.

A food hygiene management method of the present disclosure is executed by a computer, and the computer acquires core temperature information representing a core temperature of food; acquires photograph data of the food; and generates composite photograph data that indicates the core temperature information, time information of a time when the core temperature is measured, and photograph data of the food.

A program of the present disclosure is executed by a computer that performs a food hygiene management process, and the program causes the computer to execute a procedure of acquiring core temperature information representing a core temperature of food; acquiring photograph data of the food; and generating composite photograph data that indicates the core temperature information, time information of a time when the core temperature is measured, and photograph data of the food.

### Advantageous Effects of Invention

According to the present invention, it is possible to reduce the labor and time in food hygiene management, and perform more hygienic hygiene management.

### Brief Description of Drawings

FIG. 1 is a diagram for describing an example of a configuration of a food hygiene management system of a first embodiment;
FIG. 2 is a diagram illustrating an example of a hardware configuration of the food hygiene management device;
FIG. 3 is a block diagram for describing a function of the food hygiene management device;
FIG. 4 is a diagram illustrating an example of a screen displayed on a display device;
FIG. 5 is a diagram for describing an example of an operation of the food hygiene management system of the first embodiment;
FIG. 6 is a graph illustrating an example of a core temperature changing over time;
FIG. 7 is a block diagram for describing a function of a food hygiene management device of a third embodiment;
FIG. 8 is a diagram illustrating an example of a reference range table in a table format stored in reference range DB;
FIG. 9 is a diagram illustrating an example of a screen displayed on a display device on the basis of composite photograph data with an added indication indicating that the core temperature does not satisfy the reference;
FIG. 10 is a diagram for describing an example of an operation of a food hygiene management system of a third embodiment;
FIG. 11 is a diagram illustrating an example of a type selection screen;
FIG. 12 is a block diagram for describing a function of a food hygiene management device according to a fourth embodiment;
FIG. 13 is a diagram illustrating an example of a food type image;
FIG. 14 is a diagram for describing an example of an operation of the food hygiene management system according to the fourth embodiment;
FIG. 15 is a block diagram for describing a function of a food hygiene management device according to a fifth embodiment;
FIG. 16 is a diagram illustrating an example of a food information table in a table format stored in food information DB;
FIG. 17 is a diagram for describing a display example when composite photograph data stored in a storage of the food hygiene management device is viewed;
FIG. 18 is a diagram illustrating a placement member including a photographic device supporter that supports a photographic device as viewed from a lateral side; and
FIG. 19 is a diagram illustrating a placement member including a core temperature information generation device supporter that supports and moves a core temperature information generation device as viewed from a lateral side.

### Description of Embodiments

Embodiments of the present disclosure are elaborated below with reference to the accompanying drawings. Note that detailed descriptions of matters already well known, duplicate descriptions of substantially identical configurations, etc. may be omitted. The following description and the drawings to which reference is made are provided to help those skilled in the art to understand the present disclosure and are not intended to limit the scope of the claims of the present disclosure.

### First Embodiment

### General Configuration

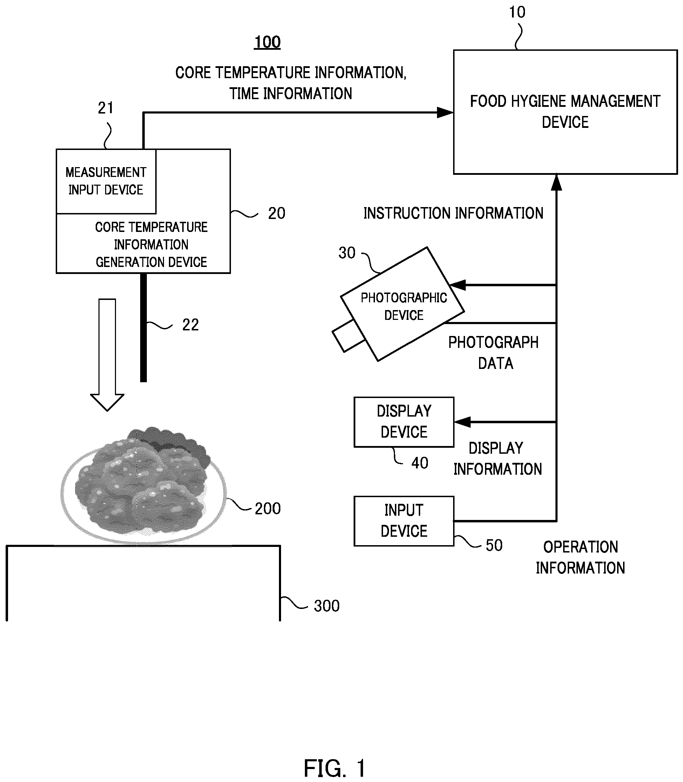

FIG. 1 is a diagram for describing an example of a configuration of food hygiene management system 100 according to a first embodiment of the present disclosure. Food hygiene management system 100 illustrated in FIG. 1 includes food hygiene management device 10, core temperature information generation device 20, photographic device 30, display device 40, and input device 50. Food hygiene management system 100 is a system for managing the hygiene state of food in a food manufacturing plant for manufacturing the food, for example.

In the following description, it is assumed that a hygiene management process for food 200 is executed in the state where food 200 to be managed is placed on placement member 300. Food 200 is food that has been cooked with heat, or food that has been chilled or frozen, for example. Cooked food 200 is carried to placement member 300 by an operator or the like in a food manufacturing plant, for example.

Food hygiene management device 10 is a device that executes the food hygiene management process of managing the hygiene state of food 200 in food hygiene management system 100, and performs overall control of the components included in food hygiene management system 100. Details of food hygiene management device 10 will be described later.

Core temperature information generation device 20 is a device that measures the core temperature of food 200. Core temperature information generation device 20 is a mobile core temperature meter, for example. The core temperature means the center temperature of food 200. Core temperature information generation device 20 includes measurement input device 21 and needle 22.

Measurement input device 21 receives an operation of starting measurement of the core temperature. Measurement input device 21 may be a switch, for example. Needle 22 is a needle for insertion into food 200. A sensor for measuring the core temperature of food 200 is provided at a tip end portion of needle 22.

The operator inserts needle 22 into food 200 such that the tip end portion of needle 22 of core temperature information generation device 20 is located inside the food, and in that state, operates measurement input device 21 to measure the core temperature of food 200.

Core temperature information generation device 20 transmits core temperature information representing the measured core temperature, to food hygiene management device 10 through radio communication or wired communication. In addition, core temperature information generation device 20 transmits, to food hygiene management device 10, time information representing time when the core temperature of food 200 is measured, together with the core temperature information.

Photographic device 30 captures an image of food 200 to generate photograph data. Photographic device 30 may capture the image of food 200 on the basis of instruction information received from food hygiene management device 10. Note that as described later, on condition that the core temperature information and the time information sent from core temperature information generation device 20 are received by food hygiene management device 10, the instruction information is transmitted from food hygiene management device 10 to photographic device 30. In other words, photographic device 30 generates the photograph data in response to acquisition of the core temperature information and the time information by food hygiene management device 10 from core temperature information generation device 20. Photographic device 30 transmits the generated photograph data to food hygiene management device 10 through radio communication or wired communication. Photographic device 30 is a camera, for example.

Display device 40 performs display on the basis of the display information generated by food hygiene management device 10. Display device 40 is a display device such as a liquid crystal display, or an organic EL (Electro Luminescence) display, for example.

Input device 50 receives an inputting operation on food hygiene management device 10, and transmits operation information representing the details of the operation to food hygiene management device 10. Input device 50 is an operation input device such as a keyboard, a mouse, a trackball, and a touch panel, for example. In the case where input device 50 is a touch panel, it may be overlaid with display device 40.

The general configuration of food hygiene management system 100 is as described above. Note that in the example illustrated in FIG. 1, food hygiene management device 10, core temperature information generation device 20, photographic device 30, display device 40, and input device 50 are described as they are independent of each other. However, at least some of the plurality of components included in the food hygiene management system of the present disclosure may be combined with each other.

Specific examples are described below. For example, display device 40 and input device 50 may be disposed in an overlaid manner so as to make up a single touch panel. In addition, photographic device 30, display device 40, and input device 50 may make up a single computer (such as a personal computer (PC), a tablet terminal, and a smartphone). Further, a computer including photographic device 30, display device 40, and input device 50 may implement the function of food hygiene management device 10. In this case, core temperature information generation device 20 may be included in a part of the computer.

As one example, a single tablet terminal may include photographic device 30, display device 40 such as a liquid crystal display, input device 50 such as a touch panel, and a computer that implements the function of food hygiene management device 10.

### Hardware Configuration of Food Hygiene Management Device 10

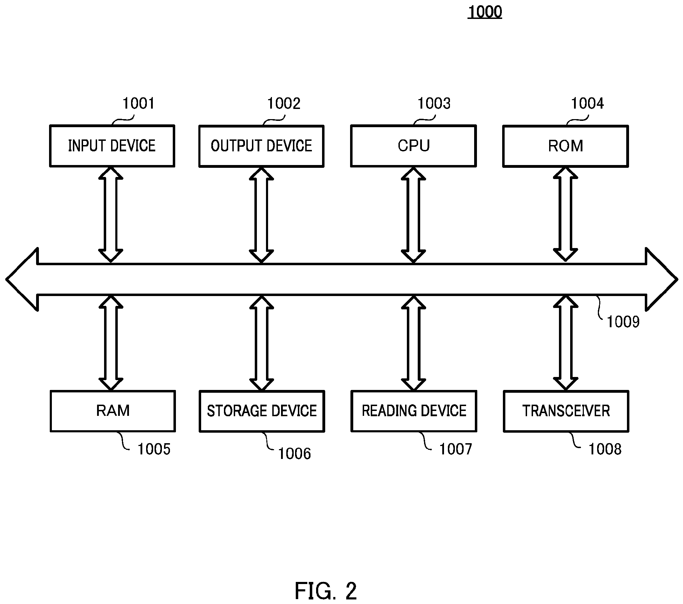

With reference to FIG. 2, a computer serving as an example of a hardware configuration of food hygiene management device 10 is described below.

FIG. 2 is a diagram illustrating an example of a hardware configuration of food hygiene management device 10. Computer 1000 serving as an example of the hardware configuration of food hygiene management device 10 includes input device 1001 such as a keyboard, a mouse and a touch pad, output device 1002 such as a display and a speaker, CPU (Central Processing Unit) 1003, ROM (read only memory) 1004, RAM (random access memory) 1005, storage device 1006 such as a hard disk device and a SSD (Solid State Drive), reading device 1007 that reads information from a recording medium such as a DVD-ROM (Digital Versatile Disk Read Only Memory) and a USB (Universal Serial Bus) memory, and transceiver 1008 that performs communication through a network, and they are connected with each other with bus 1009.

From a recording medium storing programs for implementing the functions of the above-mentioned devices, reading device 1007 reads the programs and stores it in storage device 1006. Alternatively, transceiver 1008 performs communication with the system device connected to the network, and stores in storage device 1006 the programs for implementing the functions of the above-mentioned devices downloaded from the system device.

CPU 1003 copies the program stored in storage device 1006 to RAM 1005, and sequentially reads the commands included in the program from RAM 1005 to execute it, thus implementing each function of food hygiene management device 10.

### Functions of Food Hygiene Management Device 10

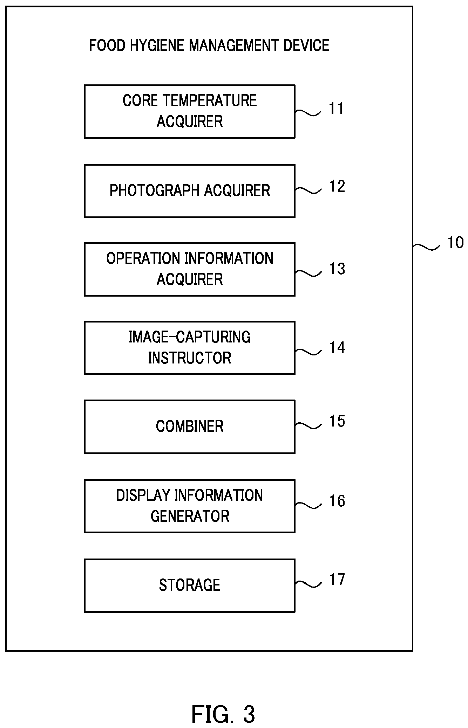

FIG. 3 is a block diagram for describing a function of food hygiene management device 10. Food hygiene management device 10 includes core temperature acquirer 11, photograph acquirer 12, operation information acquirer 13, image-capturing instructor 14, combiner 15, display information generator 16, and storage 17.

Core temperature acquirer 11 acquires the core temperature information and the time information from core temperature information generation device 20.

Photograph acquirer 12 acquires photograph data from photographic device 30.

Operation information acquirer 13 acquires operation information from input device 50.

Image-capturing instructor 14 transmits instruction information for instructing image-capturing to photographic device 30. Image-capturing instructor 14 transmits the instruction information in response to acquisition of the core temperature information and the time information by core temperature acquirer 11, for example.

Combiner 15 generates composite photograph data indicating the core temperature and the time when the core temperature is measured (measurement time) on the basis of the core temperature information, the time information, and the photograph data. Combiner 15 generates composite photograph data by combining letters or images representing the core temperature and the measurement time with the photograph data, for example.

Display information generator 16 generates display information representing a screen to be displayed on display device 40 on the basis of the composite photograph data.

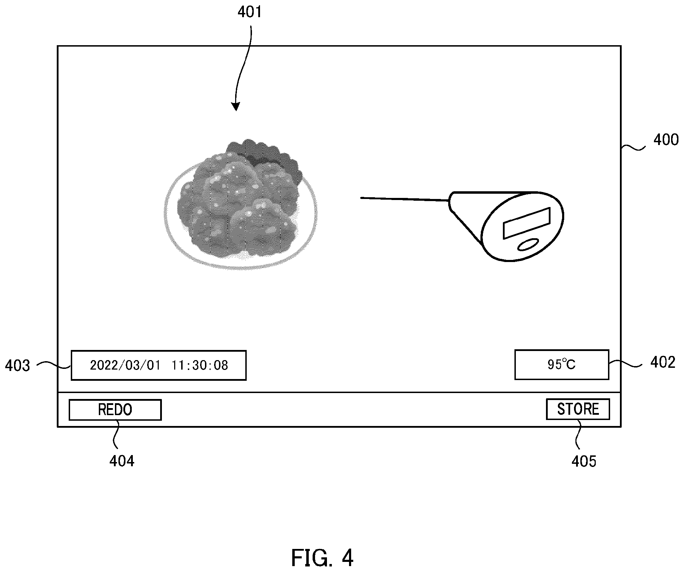

FIG. 4 is a diagram illustrating an example of a screen displayed on display device 40. Composite photograph display screen 400 illustrated in FIG. 4 includes food image 401, core temperature image 402, measurement time image 403, recapture reception image 404, and storage reception image 405.

Food image 401 is an image generated through image-capturing of food 200 by photographic device 30.

Core temperature image 402 is an image indicating the core temperature of food 200 in the form of letters. Measurement time image 403 is an image indicating the measurement time in the form of letters. The composite photograph data displayed as composite photograph display screen 400 is generated when combiner 15 combines photograph data including food image 401, with core temperature image 402 generated based on core temperature information, and measurement time image 403 generated based on time information, for example.

Recapture reception image 404 is a display image on the screen to select through input device 50, for the operator who views composite photograph display screen 400 displayed on display device 40 and determines that the image should be recaptured. The operator determines that the image should be recaptured when the photograph is not clear e.g., the photograph of food 200 is blurred when the operator views composite photograph display screen 400.

The operator who has determined that the image of food 200 should be recaptured when viewing composite photograph display screen 400 performs an operation of selecting recapture reception image 404 through input device 50. In the case where input device 50 is composed of a keyboard or a mouse, this operation is an operation of determination by putting a cursor at recapture reception image 404, for example. In addition, in the case where the input device 50 is a touch panel overlaid with display device 40, this operation is an operation of touching recapture reception image 404 with a finger, for example. Input device 50 generates operation information representing selection of recapture reception image 404, and transmits it to food hygiene management device 10.

Food hygiene management device 10 that has received the operation information representing selection of recapture reception image 404 instructs recapture of the photograph of food 200 with image-capturing instructor 14, generates new composite photograph data with combiner 15 using the photograph data acquired anew, and generates new display information with display information generator 16. In this manner, composite photograph data with no blur can be generated. In this case, the combined image data before the recapture may be discarded or stored in storage 17 as described later.

Storage reception image 405 is a display image on the screen to select through input device 50, for the operator who views composite photograph display screen 400 displayed on display device 40, and determines that it is not necessary to recapture the image of food 200 and that the core temperature of food 200 is within a reference range set in advance for each type of food 200. Note that if the core temperature indicated by core temperature image 402 is not within the reference range when the operator views composite photograph display screen 400, then the food 200 does not satisfy the reference to be satisfied in terms of hygiene, and therefore it is determined that cooking should redone.

Specific examples are described below. For example, when the core temperature indicated by core temperature image 402 is 72°C in the case where food 200 is fried food and the reference range of the core temperature of the fried food is 75°C or above, the operator determines that the food 200 should be recooked. Alternatively, when the core temperature indicated by core temperature image 402 is -18°C in the case where food 200 is a frozen tuna and the reference range of the frozen tuna is -20°C or below, the operator determines that the food 200 should be recooked or reprocessed.

When the operator determines that food 200 should be recooked, the operator returns the food 200 to the cooking step, and recooks the food 200, for example. Alternatively, the operator may ask another operator to recook the food 200.

In addition, when determining that it is not necessary to recapture the image of food 200 and that the core temperature of food 200 is within the reference range, the operator performs an operation of selecting storage reception image 405 through input device 50. In response to this, input device 50 generates operation information representing selection of storage reception image 405, and transmits it to food hygiene management device 10.

Now description returns to FIG. 2. Storage 17 is a storage device that stores composite photograph data when operation information acquirer 13 receives operation information indicating selection of storage reception image 405. Note that while FIG. 2 illustrates a case where food hygiene management device 10 includes storage 17 serving a storage device, the present disclosure is not limited to this, and food hygiene management device 10 may not include storage 17, for example. In this case, food hygiene management device 10 may transmit composite photograph data to an external server device through a network (such as the Internet, and an intranet) not illustrated in the drawing, so as to store the composite photograph data in the server device.

Examples of storage 17 include a HDD (Hard Disk Drive) and a SSD (Solid State Drive). When the composite photograph data is stored in storage 17, it may be stored in a table format with time information and composite photograph data associated with each other, for example. Note that storage 17 may store the composite photograph data in the storage device in a format of binary data, or a URL representing the address of the composite photograph data stored in an external server device may be stored instead of the binary data.

### Exemplary Operations

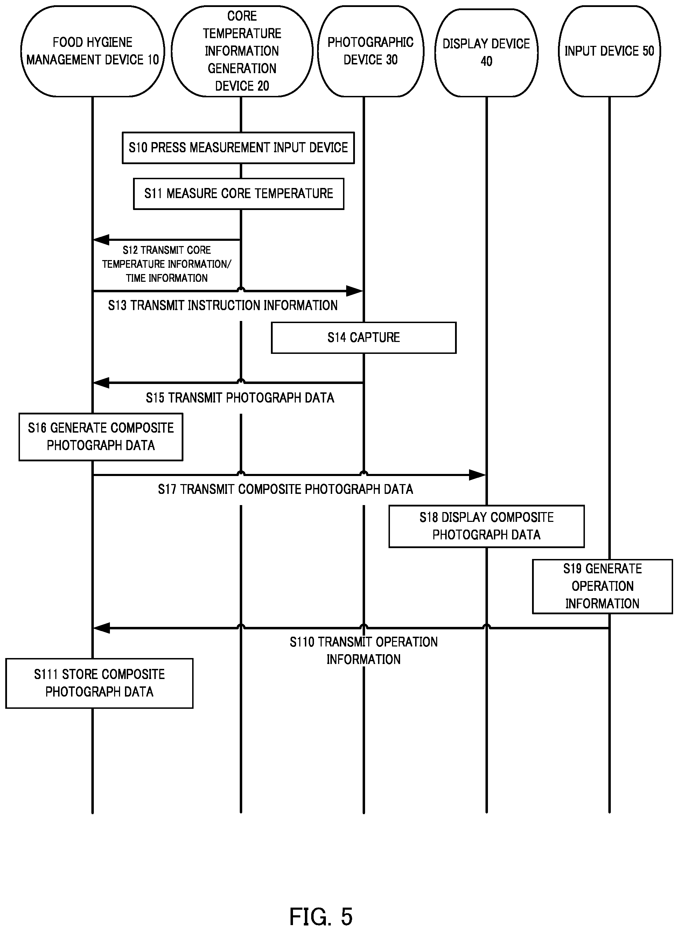

Next, an exemplary operation of food hygiene management system 100 is described. FIG. 5 is a diagram for describing an example of an operation of food hygiene management system 100 of the first embodiment. At the start point of the sequence diagram illustrated in FIG. 5, a standby screen prompting the measurement of the core temperature of food 200 and the like may be displayed on display device 40, for example. The standby screen may display a message such as "measure core temperature", the current time and the like, for example.

At step S10, in the state where needle 22 is inserted in food 200 placed on placement member 300 (see FIG. 1), measurement input device 21 of core temperature information generation device 20 is pressed by the operator.

At step S11, core temperature information generation device 20 performs measurement of the core temperature of food 200, and generates the core temperature information and the time information representing the measured time.

At step S12, core temperature information generation device 20 transmits the core temperature information and the time information to food hygiene management device 10.

At step S13, food hygiene management device 10 that has received the core temperature information and the time information transmits to photographic device 30 instruction information to perform image-capturing of the photograph of food 200.

At step S14, photographic device 30 that has received the instruction information captures the image of food 200 to generate photograph data.

At step S15, photographic device 30 transmits the photograph data to food hygiene management device 10.

At step S16, food hygiene management device 10 that has received the photograph data generates composite photograph data on the basis of the core temperature information, the time information, and the photograph data.

At step S17, food hygiene management device 10 transmits the composite photograph data to display device 40.

At step S18, display device 40 displays the composite photograph data.

At step S19, input device 50 generates operation information for storing the composite photograph data by the operator who has viewed composite photograph display screen 400 of the composite photograph data.

At step S110, input device 50 transmits the operation information to food hygiene management device 10.

At step S111, food hygiene management device 10 that has received the operation information of storing the composite photograph data stores the composite photograph data. In this manner, the food hygiene management process for one food 200 is completed. Thereafter, the operator carries food 200 for which the food hygiene management process has been completed, to the next step, e.g., the packaging step or the shipment step, and puts new food 200 on placement member 300 (see FIG. 1). Then the process is returned to step S11.

Note that in the sequence diagram of FIG. 5, when the operator who has viewed the composite photograph data displayed on display device 40 at step S18 determines that the image should be recaptured, and operates recapture reception image 404 (see FIG. 4), input device 50 generates operation information indicating that recapture reception image 404 has been operated, and transmits it to food hygiene management device 10. In response to this, food hygiene management device 10 retransmits the instruction information of instructing image-capturing to photographic device 30 to cause photographic device 30 to recapture the image. Then, food hygiene management device 10 generates new composite photograph data on the basis of the recaptured photograph data. The new composite photograph data is transmitted to display device 40 and displayed. Such processes are repeated until the operation of storage reception image 405 is performed by the operator.

The sequence diagram of FIG. 5 illustrates an example case where core temperature information generation device 20 generates the time information obtained by measuring the core temperature together with the core temperature information and transmits it to food hygiene management device 10, but the present disclosure is not limited to this. For example, core temperature information generation device 20 may not generate the time information, and food hygiene management device 10 that has received the core temperature information from core temperature information generation device 20 may generate the time information based on the received time. In addition, the time information may be generated as necessary by a component other than core temperature information generation device 20 or food hygiene management device 10, i.e., photographic device 30, display device 40, or input device 50.

The exemplary operations of food hygiene management system 100 described above are merely examples, and different operations may be performed depending on the operation method set by the company operating food hygiene management system 100, for example. For example, in the sequence diagram of FIG. 5, when the operation of storage reception image 405 is performed by the operator at step S19, food hygiene management device 10 stores the composite photograph data at step S111. As another exemplary operation, food hygiene management device 10 may store the combined image data in response to an action other than the operation of storage reception image 405.

Specific examples are described below. For example, food hygiene management device 10 may further include a microphone and a voice recognizer, such that combined image data is stored when the microphone and the voice recognizer recognize words such as "store" and "execute" voiced by the operator. Alternatively, food hygiene management device 10 may include a foot switch such as a pedal, such that combined image data is stored when the operator performs an operation of stepping on the foot switch. This configuration eliminates the need for the operator to perform the operation of touching input device 50 or the like of food hygiene management system 100, which is more hygienic.

Alternatively, depending on the operation method of food hygiene management system 100, the combined image data may always be stored regardless of whether the core temperature of food 200 is within the reference range.

In this case, when a predetermined time elapses after the combined image data is displayed on display device 40, food hygiene management device 10 automatically stores that food image data, for example. The screen displayed on display device 40 may display a message such as "combined image data will be stored after 10 seconds", for example. In addition, when combined image data of food whose core temperature is not within the reference within range is to be stored, it may be stored with a flag indicating that the core temperature is not within the reference range or the like attached to the combined image data. In this case, hygiene management can be performed through measurement of the core temperature of food 200, and the information relating to the time of the day where the core temperature does not satisfy the reference can be stored.

As described above, with food hygiene management device 10 according to the first embodiment of the present disclosure, composite photograph data indicating the core temperature of food 200 and the measurement time of the core temperature is automatically generated in response to an operation of measurement input device 21 of core temperature information generation device 20 or the like. Since the generated composite photograph data is displayed on display device 40, the operator can confirm at a glance the food image of captured food 200, the core temperature of food 200, and the measurement time. In this manner, in comparison with the case where the operator inputs the core temperature and the measurement time by hand, the labor of the operator required for confirming the core temperature of food 200 can be considerably reduced, and the working hours can be shortened.

### Second Embodiment

In the above-mentioned described in the first embodiment, at the time when measurement input device 21 of core temperature information generation device 20 is pressed by the operator, core temperature information generation device 20 measures the core temperature of food 200 to which needle 22 is inserted, and outputs it as the core temperature information. Depending on food, the internal temperature may vary without being stabilized at the timing immediately after it is cooked. In such a case, the core temperature measured at the time when measurement input device 21 is pressed may not possibly be the correct core temperature of food 200, and it is therefore difficult to correctly determine whether food 200 has been properly cooked.

The second embodiment describes food hygiene management system 100 that waits until the core temperature is stabilized in the case where the core temperature is varied to employ a stable core temperature as the core temperature information.

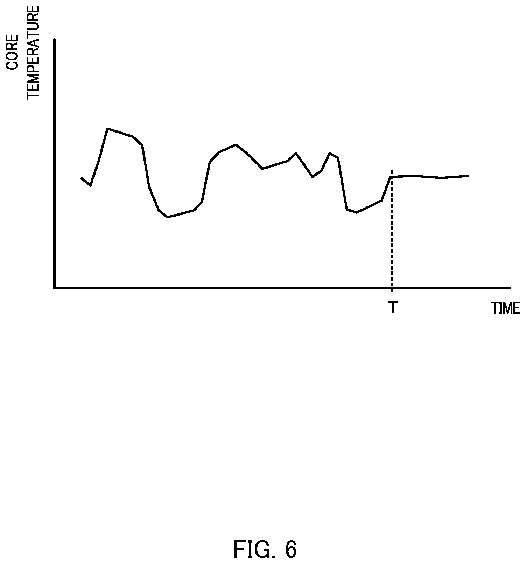

FIG. 6 is a graph illustrating an example of a core temperature changing over time. In the example illustrated in FIG. 6, the core temperature varies before time T, but is substantially stable with no variation after time T.

In the second embodiment, core temperature information generation device 20 measures the core temperature at a short time interval (for example, every 0.2 seconds) when measurement input device 21 is pressed, and transmits it as the core temperature information to food hygiene management device 10. Core temperature acquirer 11 of food hygiene management device 10 performs the following process for determining whether the core temperature has been stabilized by using the core temperature information received from core temperature information generation device 20.

It is assumed that the core temperature information of a certain time T1 in the core temperature information received by core temperature acquirer 11 indicates core temperature t1. Core temperature acquirer 11 calculates difference D1 between core temperature t1 and core temperature t0 indicated by the core temperature information of time T0 measured at a time immediately before time T1, i.e., approximately 0.2 seconds before time T1, and determines whether the absolute value of difference of D1 is smaller than a predetermined threshold value (for example, 0.5°C). When the absolute value of difference D1 is not smaller than the threshold value, core temperature acquirer 11 discards the core temperature information of time T0, whereas when the absolute value of difference D1 is smaller than the threshold value, core temperature acquirer 11 retains the core temperature information of time T0 and the core temperature information of time T1.

Then, core temperature acquirer 11 calculates difference D2 between core temperature t1 and core temperature t2 indicated by the core temperature information of time T2 measured subsequent to (after approximately 0.2 seconds) time T1, and determines whether difference D2 is smaller than the above-described threshold value. When the absolute value of difference D2 is not smaller than the threshold value, core temperature acquirer 11 discards the core temperature information of time T1, whereas when the absolute value of difference D2 is smaller than the threshold value, core temperature acquirer 11 retains the core temperature information of time T1 and the core temperature information of time T2.

Core temperature acquirer 11 repeats the above-described operation predetermined times. More specifically, in the case where the predetermined times is five times, core temperature acquirer 11 further performs the following processes. Core temperature acquirer 11 calculates difference D3 between core temperature t2, and core temperature t3 indicated by the core temperature information of time T3 measured subsequent to time T2, and determines whether difference D3 is smaller than the threshold value. When the absolute value of difference D3 is not smaller than the threshold value, core temperature acquirer 11 discards the core temperature information of time T2, whereas when the absolute value of difference D3 is smaller than the threshold value, core temperature acquirer 11 retains the core temperature information of time T2 and the core temperature information of time T3. Next, core temperature acquirer 11 calculates difference D4 between core temperature t3, and the core temperature t4 indicated by the core temperature information of time T4 measured subsequent to time T3, and determines whether difference D4 is smaller than the threshold value. When the absolute value of difference D4 is not smaller than the threshold value, core temperature acquirer 11 discards the core temperature information of time T3, whereas when the absolute value of difference D4 is smaller than the threshold value, core temperature acquirer 11 retains the core temperature information of time T3 and the core temperature information of time T4. Further, core temperature acquirer 11 calculates difference D5 between core temperature t4, and core temperature t5 indicated by the core temperature information of time T5 measured subsequent to time T4, and determines whether difference D5 is smaller than the threshold value. When the absolute value of difference D5 is not smaller than the threshold value, core temperature acquirer 11 discards the core temperature information of time T4, whereas when the absolute value of difference D5 is smaller than the threshold value, core temperature acquirer 11 retains the core temperature information of time T4 and the core temperature information of time T5.

Finally, when the core temperature information whose difference from the last time is smaller than the threshold value has been received a predetermined number of consecutive times, core temperature acquirer 11 acquires the latest core temperature information, and outputs the acquired core temperature information to combiner 15 and the like. In the above-mentioned example, when all of differences D1 to D5 are lower than 0.5°C, core temperature acquirer 11 acquires the core temperature information of time T5 as the core temperature information to be used in food hygiene management device 10. In this manner, core temperature information with a stable core temperature can be acquired.

Note that in the above-mentioned described example, core temperature acquirer 11 of food hygiene management device 10 performs the process of determining whether the core temperature is stable, but core temperature information generation device 20 may perform this process. In this case, when the core temperature information whose difference from the last time is smaller than the threshold value has been measured a predetermined number of consecutive times, core temperature information generation device 20 may transmit the latest core temperature information to food hygiene management device 10.

### Third Embodiment

In the first embodiment, the operator determines whether the core temperature of food 200 is within the reference range by viewing the combined image data displayed on display device 40. In the third embodiment, the determination whether the core temperature is within the reference range is automatically executed by food hygiene management device 10A according to the third embodiment.

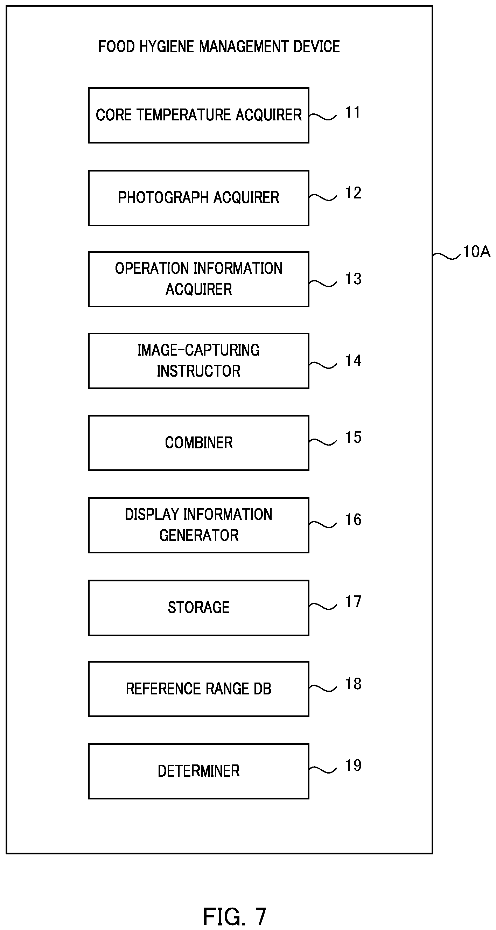

FIG. 7 is a block diagram for describing a function of food hygiene management device 10A according to the third embodiment. As illustrated in FIG. 7, food hygiene management device 10A according to the third embodiment includes reference range database (hereinafter referred to as DB) 18, and determiner 19 in addition to the components described in the first embodiment.

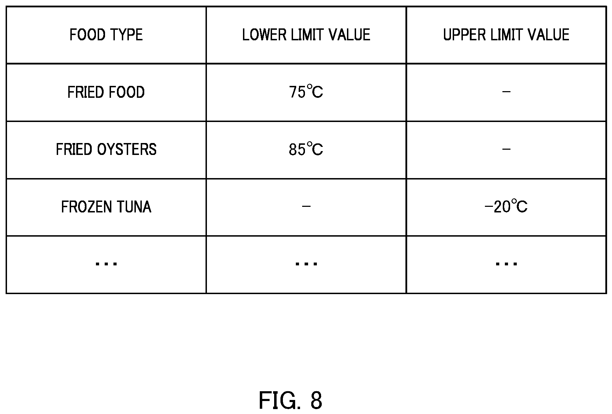

Reference range DB 18 is a database storing the reference range for each type of food. FIG. 8 is a diagram illustrating an example of a reference range table in a table format stored in reference range DB 18. As illustrated in FIG. 8, the reference range table includes information such as food type (menu name), lower limit value, and upper limit value. The reference range table is prepared in advance by a company operating food hygiene management system 100 or the like, and is stored in reference range DB 18, for example.

Determiner 19 determines whether the core temperature indicated by the core temperature information acquired by core temperature acquirer 11 is within the reference range on the basis of the information read from reference range DB 18. For example, in the example illustrated in FIG. 8, when the food is fried oysters and the acquired core temperature information indicates 80°C, determiner 19 determines that the core temperature of the food does not satisfy the reference, whereas when the acquired core temperature information indicates 97°C, determiner 19 determines that the core temperature of the food satisfies the reference.

When determiner 19 determines that the core temperature of the food does not satisfy the reference, determiner 19 provides combiner 15 with a notification that the core temperature of the food does not satisfy the reference. On the basis of the notification, combiner 15 adds an indication indicating that the core temperature does not satisfy the reference when generating composite photograph data. When the composite photograph data generated by combiner 15 is transmitted to display device 40 and displayed, the operator can understand that the core temperature of the food does not satisfy the reference at a glance.

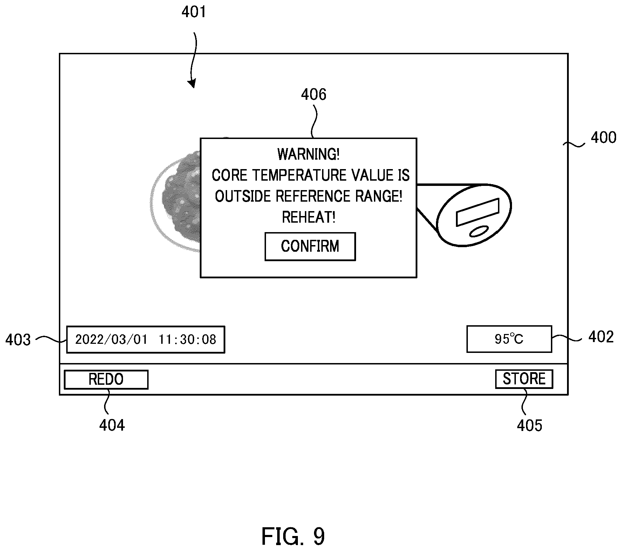

FIG. 9 is a diagram illustrating an example of composite photograph display screen 400 displayed on display device 40 on the basis of composite photograph data with an added indication indicating that the core temperature does not satisfy the reference. Composite photograph display screen 400 illustrated in FIG. 9 includes core temperature unreached image 406, in addition to food image 401, core temperature image 402, measurement time image 403, recapture reception image 404, and storage reception image 405 provided in composite photograph display screen 400 described in the first embodiment.

Core temperature unreached image 406 includes a message including letters, marks and the like such as "WARNING! CORE TEMPERATURE VALUE IS OUTSIDE REFERENCE RANGE! REHEAT! ", and an image that allows the operator to understand that the core temperature does not satisfy the reference at a glance. Core temperature unreached image 406 may include prominent colors, such as fluorescent, yellow or red, in the text or background. In addition, core temperature unreached image 406 may also include prominent symbols such as exclamation marks.

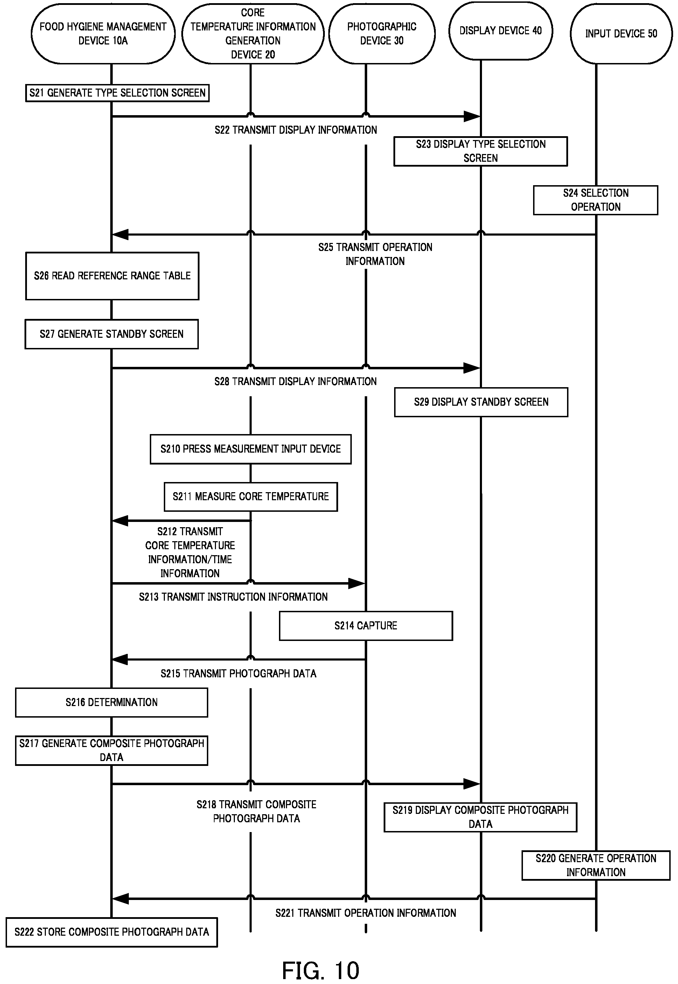

FIG. 10 is a diagram for describing an example of an operation of food hygiene management system 100 according to the third embodiment.

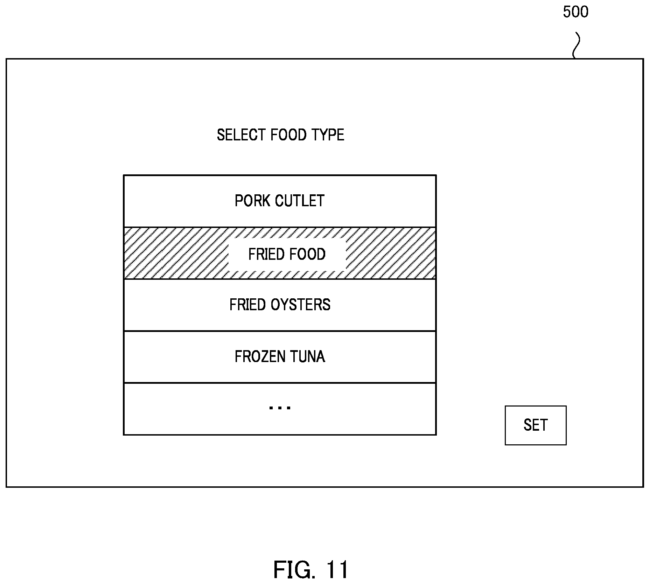

At step S21, food hygiene management device 10A generates a type selection screen to be displayed on display device 40. The type selection screen is a screen for selecting the food type. FIG. 11 is a diagram illustrating an example of type selection screen 500.

At step S22, food hygiene management device 10A transmits display information for displaying the type selection screen to display device 40.

At step S23, display device 40 displays the type selection screen.

At step S24, input device 50 receives the operation of selecting the food type by the operator who has viewed the type selection screen, and generates operation information representing the selected food type.

At step S25, input device 50 transmits the operation information to food hygiene management device 10A.

At step S26, food hygiene management device 10A reads from reference range DB 18 a reference range table corresponding to the type represented by the operation information.

At step S27, food hygiene management device 10A generates a standby screen including information relating to the selected food type and the reference range of the type. The standby screen includes letters, images and the like such as "menu name: fried food, reference range: 75°C or above", for example.

At step S28, food hygiene management device 10A transmits to display device 40 display information for displaying the standby screen.

At step S29, display device 40 displays the standby screen on the basis of the display information.

At step S210, in the state where needle 22 is inserted in food 200 placed on placement member 300 (see FIG. 1), measurement input device 21 of core temperature information generation device 20 is pressed by the operator.

At step S211, core temperature information generation device 20 performs measurement of the core temperature of food 200, and generates the core temperature information and the time information representing the measured time.

At step S212, core temperature information generation device 20 transmits the core temperature information and the time information to food hygiene management device 10A.

At step S213, food hygiene management device 10A that has received the core temperature information and the time information transmits to photographic device 30 instruction information to perform image-capturing of the photograph of food 200.

At step S214, photographic device 30 that has received the instruction information captures the image of food 200 to generate photograph data.

At step S215, photographic device 30 transmits the photograph data to food hygiene management device 10A.

At step S216, food hygiene management device 10A determines whether the core temperature indicated by the core temperature information is within the reference range on the basis of the reference range table and the core temperature information.

At step S217, food hygiene management device 10A that has received the photograph data generates composite photograph data. Here, when determining that the core temperature is within the reference range at step S216, food hygiene management device 10A generates composite photograph data that displays the core temperature information and the time information, whereas when determining that the core temperature is not within the reference range, food hygiene management device 10A generates composite photograph data additionally including an indication indicating that the core temperature does not satisfy the reference in addition to the core temperature information and the time information.

At step S218, food hygiene management device 10A transmits the composite photograph data to display device 40.

At step S219, display device 40 displays the composite photograph data.

At step S220, input device 50 generates operation information for storing the composite photograph data by the operator who has viewed composite photograph display screen 400 of the composite photograph data.

At step S221, input device 50 transmits the operation information to food hygiene management device 10A.

At step S222, food hygiene management device 10A that has received the operation information of storing the composite photograph data stores the composite photograph data. In this manner, the food hygiene management process for one food 200 is completed. Thereafter, the operator carries food 200 for which the food hygiene management process has been completed to a packaging step or a shipment step, and puts new food 200 on placement member 300 (see FIG. 1), for example. Then the process is returned to step S29 (the step of displaying the standby screen by display device 40).

Note that in the exemplary operation of the third embodiment illustrated in FIG. 10, when the operator who has viewed the screen of the composite photograph data determines that the image should be recaptured such as when the image of the food included in the composite photograph data is blurred, the operator performs recapturing operation through input device 50 to recapture the image of the food, as in the first embodiment.

In addition, in the exemplary operation of the third embodiment illustrated in FIG. 10, when the core temperature of the food is not within the reference range, display device 40 displays composite photograph data with an added indication indicating that the core temperature does not satisfy the reference as exemplified in FIG. 9 at step S218 (the step of displaying composite photograph data). When the operator who has confirmed the indication indicating that the core temperature does not satisfy the reference has performed an operation of showing the confirmation, food hygiene management device 10A may perform a control of returning the screen displayed on display device 40 to the standby screen (see step S27). Alternatively, when a predetermined time (for example, 10 seconds) has elapsed after the composite photograph data with an added indication indicating that the core temperature does not satisfy is displayed on the reference display device 40, food hygiene management device 10A may perform a control of automatically returning the screen displayed on display device 40 to the standby screen.

As described above, with food hygiene management device 10A of the third embodiment, food hygiene management device 10A automatically determines whether the core temperature of the food satisfies the reference, and therefore the operator does not need to perform the determination. In this manner, the labor and working hours of the operator can be reduced, and decision errors of the operator can be prevented.

### Fourth Embodiment

In the third embodiment, the operator selects the food type in the type selection screen and then food hygiene management device 10A reads the reference range data corresponding to the selected type. In a fourth embodiment, instead of the selection of the food type by the operator, letters or images representing the type of food 200 are prepared in advance on placement member 300 (see FIG. 1) on which to put food 200, and photographic device 30 takes a photograph including food 200 and the letters or images.

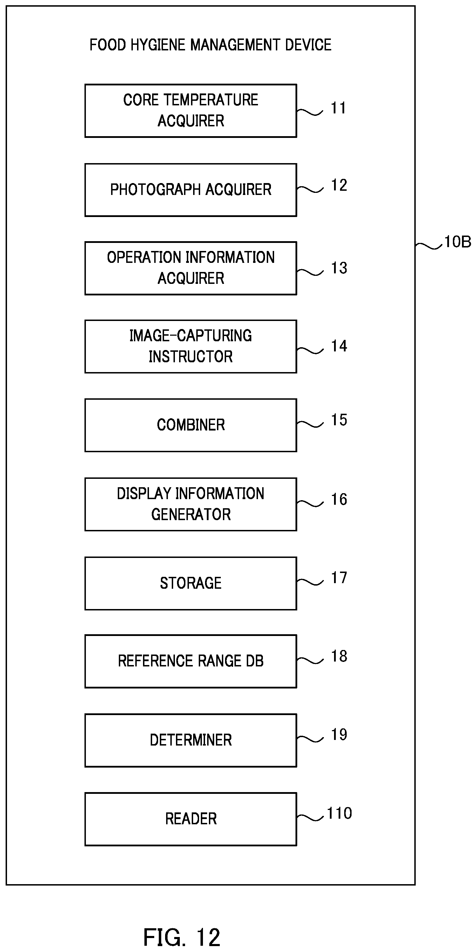

FIG. 12 is a block diagram for describing a function of food hygiene management device 10B according to the fourth embodiment. As illustrated in FIG. 12, in the fourth embodiment, food hygiene management device 10B includes reference range DB 18, determiner 19, and reader 110 in addition to the components described in the first embodiment.

Reference range DB 18 is a database storing the reference range for each type of food. Determiner 19 determines whether the core temperature indicated by the core temperature information acquired by core temperature acquirer 11 is within the reference range on the basis of the information read from reference range DB 18.

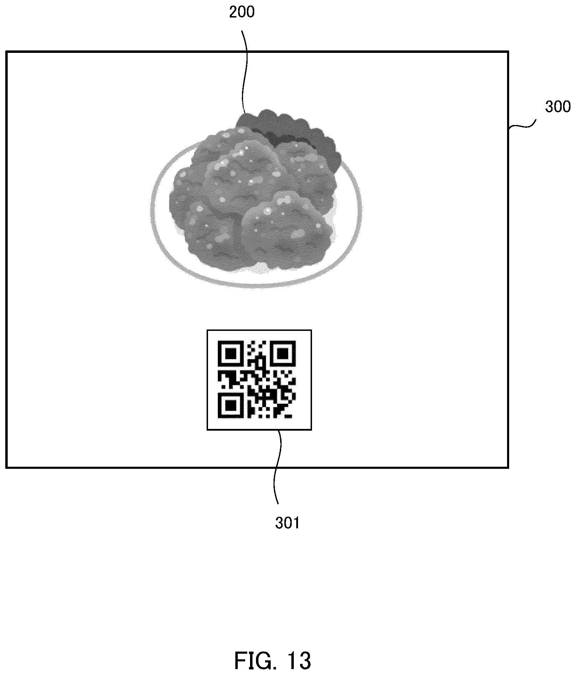

Reader 110 specifies the food type by reading a food type image included in photograph data captured by photographic device 30. FIG. 13 is a diagram illustrating an example of a food type image. As illustrated in FIG. 13, food type image 301 is provided on the top surface of placement member 300 near food 200. Food type image 301 is a QR code (registered trademark), a bar code or the like, for example. FIG. 13 is a diagram illustrating an example of food type image 301.

When capturing the image of food 200, photographic device 30 captures the food and food type image 301 in one photograph. In this manner, photograph data including the food and food type image 301 is generated, and when food hygiene management device 10B receives the photograph data and reader 110 reads food type image 301 of the photograph data, food hygiene management device 10B can determine the type of food 200.

Note that food type image 301 may be pasted to placement member 300 by the operator's hand or the like when the hygiene management process of food 200 is started in food hygiene management system 100.

While FIG. 13 describes an example in which food type image 301 is provided on placement member 300, letters or marks representing the type of the food and the like may be provided on placement member 300, for example. In the present disclosure, the food type images, the letters or marks representing the food type and the like are collectively referred to as identification information.

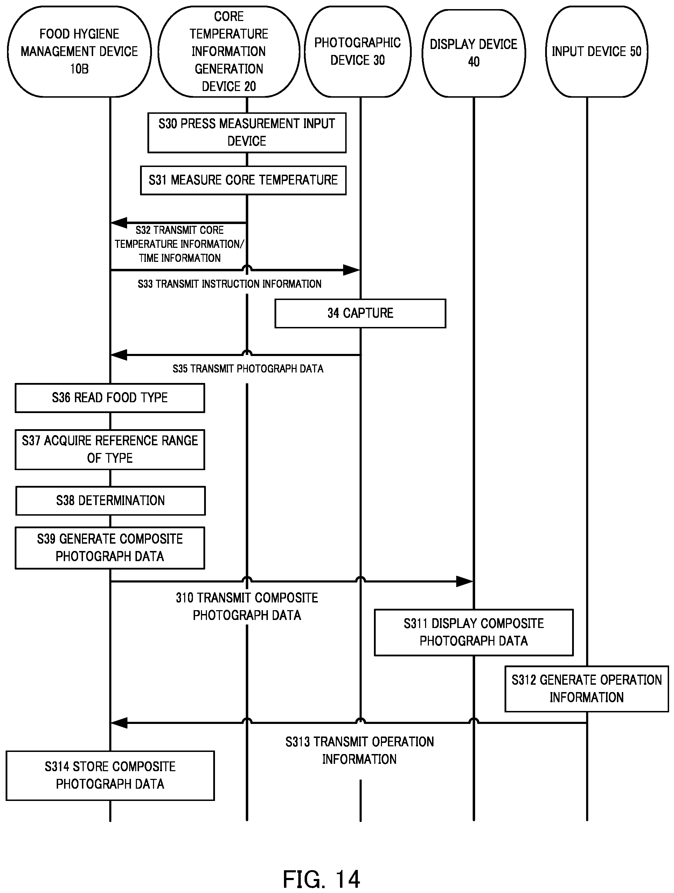

FIG. 14 is a diagram for describing an example of an operation of food hygiene management system 100 of the fourth embodiment. Except for step S36, step S37, and step S38, the exemplary operation of food hygiene management system 100 of the fourth embodiment is the same as the above-described exemplary operation of the first embodiment, and therefore the description thereof is omitted.

At step S36, food hygiene management device 10B reads the food type on the basis of the photograph data received from photographic device 30.

At step S37, food hygiene management device 10B acquires the reference range data corresponding to the read food type.

At step S38, food hygiene management device 10B determines whether the core temperature indicated by the core temperature information is within the reference range on the basis of the reference range table and the core temperature information. The operations of the subsequent steps are the same as the operations subsequent to step S17 illustrated in FIG. 5 of the first embodiment.

With food hygiene management system 100 of the fourth embodiment, the operator does not need to perform the operation of selecting the food type, and thus the labor of the operator can be reduced.

### Fifth Embodiment

Depending on the company operating food hygiene management system 100 and the like, the type of food to be produced may be determined in advance for each time of day. In that case, food hygiene management system 100 according to a fifth embodiment automatically determines the food type managed by food hygiene management device 10C on the basis of the present time.

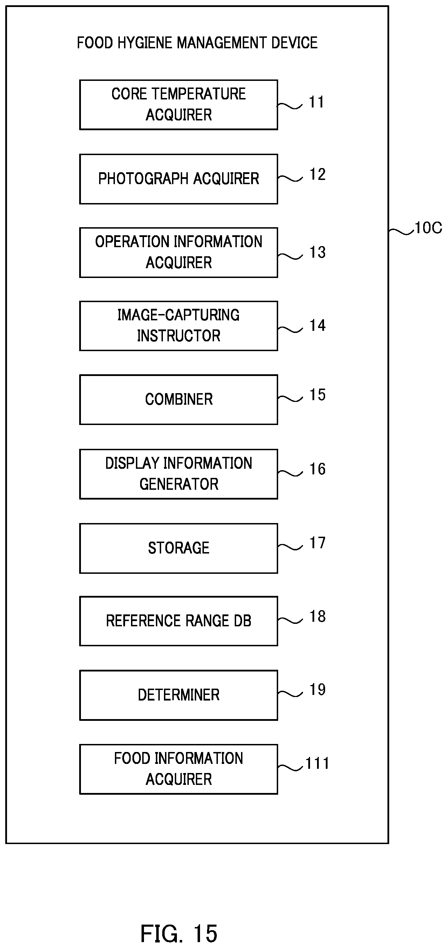

FIG. 15 is a block diagram for describing a function of food hygiene management device 10C according to the fifth embodiment. As illustrated in FIG. 15, in the fifth embodiment, food hygiene management device 10C includes reference range DB 18, determiner 19 and food information acquirer 111 in addition to the above-described configuration of the first embodiment.

Reference range DB 18 is a database storing the reference range for each type of food. Determiner 19 determines whether the core temperature indicated by the core temperature information acquired by core temperature acquirer 11 is within the reference range on the basis of the information read from reference range DB 18.

Food information acquirer 111 acquires food information including information relating to the food type and the reference range of the core temperature corresponding to the type on the basis of the present time from food information database (DB) provided outside food hygiene management system 100. Food information DB is a database constructed in advance by a company operating food hygiene management system 100, for example. Such a database is often already constructed even by companies that have not introduced food hygiene management system 100. In this manner, when introducing new food hygiene management system 100, it is not necessary to prepare new database related to the reference range, and the existing database can be used, thus reducing the cost of introducing food hygiene management system 100.

In the above-described third and fourth embodiments, food hygiene management device 10C includes reference range DB 18, and acquires the information relating to the reference range with reference to reference range DB 18. In the fifth embodiment, food hygiene management system 100 does not include the database that provides the information relating to the reference range, and acquires the food information including the information relating to the reference range from the database constructed in advance.

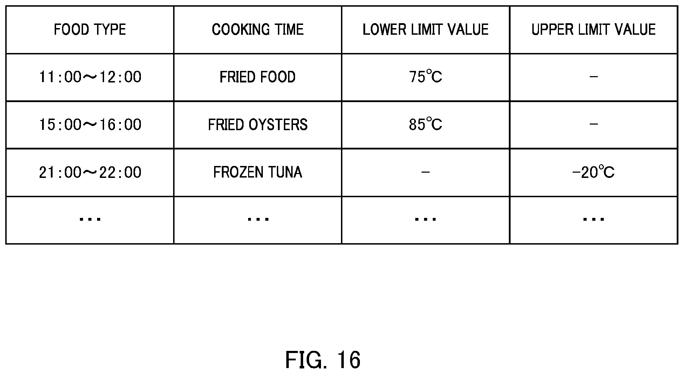

FIG. 16 is a diagram illustrating an example of a food information table in a table format stored in food information DB. Food information acquirer 111 executes subsequent processes by acquiring food information from an external food information DB at the start of the food hygiene management process.

With food hygiene management system 100 of the fifth embodiment, existing databases can be used, and therefore the cost of introducing food hygiene management system 100 can be reduced.

Note that in the above-described fifth embodiment, from the food information database (DB) provided outside food hygiene management system 100, the food information including the information relating to the food type and the reference range of the core temperature corresponding to the type is automatically acquired on the basis of the present time. However, in the fifth embodiment, the selection of the food type by the operator can be received as in the third embodiment. In this case, it suffices that food hygiene management device 10C acquires in advance the information relating to the reference range of the core temperatures corresponding to a plurality of food types from the external food information DB, and displays the type selection screen exemplified in FIG. 11 on display device 40 so as to receive the selection of the food type by the operator when the operator performs the food hygiene management process using food hygiene management system 100.

### Sixth Embodiment

A sixth embodiment describes a display example of a case of viewing composite photograph data stored in storage 17 of food hygiene management device 10.

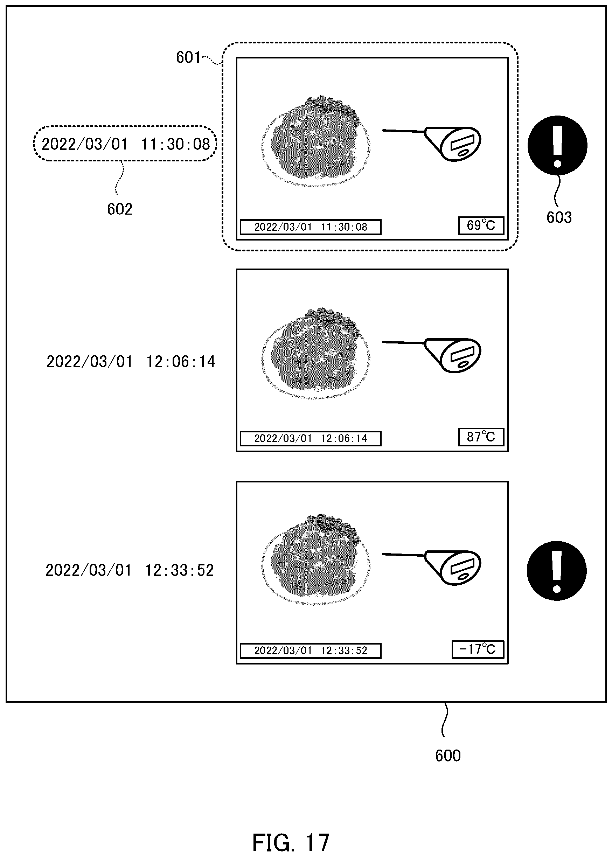

FIG. 17 is a diagram for describing a display example of a case of viewing composite photograph data stored in storage 17 of food hygiene management device 10. Viewing screen 600 illustrated in FIG. 17 may be a screen displayed on display device 40, or a screen displayed on a display device of a terminal used by an administrator of food hygiene management system 100 or the like, for example. Viewing screen 600 is a screen for viewing previously stored composite photograph data.

Viewing screen 600 includes composite photograph display section 601, time display section 602, and warning mark 603. Composite photograph display section 601 is a section that displays composite photograph data read from storage 17. Time display section 602 is a section that displays time information corresponding to each composite photograph data displayed on composite photograph display section 601. Warning mark 603 is a mark that warns that the core temperature does not satisfies the reference for each composite photograph data.

Note that in the example illustrated in FIG. 17, viewing screen 600 includes three composite photograph display sections 601 and three time display sections 602, but may actually include more composite photograph display sections 601 and time display sections 602.

The plurality of composite photograph display sections 601 is arranged in order of the time (the time indicated by the time information) at which the core temperature was measured. With this configuration, the administrator can easily recognize the time of the day where the core temperature does not satisfy the reference with warning mark 603, and can take measures such as reviewing the cooking step of that time of the day.

### Seventh Embodiment

A seventh embodiment relates to a jig for fixing photographic device 30. When the operator captures an image with photographic device 30 in the operator's hand, camera-shake may occur, and if camera-shake occur, the image should be recaptured. To prevent such a situation, in the sixth embodiment, placement member 300 is provided with photographic device supporter 302.

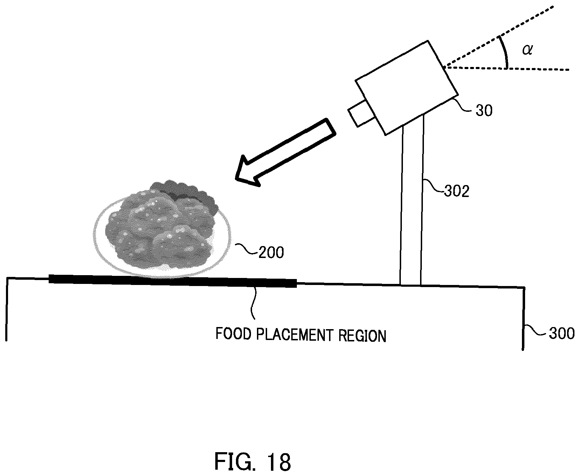

FIG. 18 is a diagram illustrating placement member 300 including photographic device supporter 302 that supports photographic device 30 as viewed from a lateral side.

Photographic device supporter 302 has a column shape extended upward from placement member 300, for example. Photographic device 30 is attached at an upper end portion of photographic device supporter 302. Photographic device 30 is attached such that its image-capturing direction is tilted at angle α with respect to the horizontal plane. The image-capturing direction means the direction to which photographic device 30 faces.

In the region corresponding to the field angle of photographic device 30 in the top surface of placement member 300, a frame for placing food 200 in that region is provided, for example. In FIG. 18, the region corresponding to the field angle of photographic device 30 is illustrated as a food placement region.

With this configuration, when the operator puts food 200 inside the frame indicating the food placement region, the entirety of that food 200 falls within the capturing range of photographic device 30.

In addition, as illustrated in FIG. 18, photographic device supporter 302 is provided at a position slightly away from the food placement region in the horizontal direction. In this manner, photographic device 30 is not positioned directly above food 200. Although moisture or oil may volatilize from food 200, the possibility of the moisture or oil adhering on photographic device 30 and interfering with the photography of food 200 can be reduced because photographic device 30 is not positioned directly above food 200.

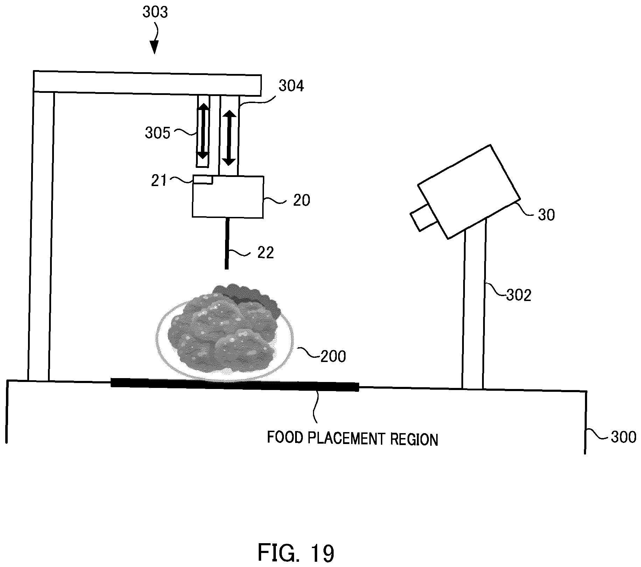

FIG. 19 is a diagram illustrating placement member 300 further including core temperature information generation device supporter 303 that supports and moves core temperature information generation device 20 as viewed from the lateral side. Core temperature information generation device supporter 303 includes position adjuster 304 that expands and contracts to adjust the position of core temperature information generation device 20 in the up-down direction, and pusher 305 that expands and contracts to push measurement input device 21 of core temperature information generation device 20.

As illustrated in FIG. 19, core temperature information generation device 20 is supported by core temperature information generation device supporter 303 in such a manner that it is suspended from the upper side, for example. Position adjuster 304 is a portion where the core temperature information generation device is suspended, and the position of core temperature information generation device 20 in the up-down direction can be adjusted with position adjuster 304 mechanically expanded and contracted, for example. Specifically, when the operator puts food 200 in the food placement region, position adjuster 304 extends and the position of core temperature information generation device 20 moves down such that needle 22 is automatically inserted into food 200, for example. In this state, when pusher 305 extends and presses down measurement input device 21, the processes up to measurement of the core temperature can be automatically performed.

Note that in the above-described example illustrated in FIG. 19, measurement input device 21 is pressed down with pusher 305 expanded and contracted, but core temperature information generation device 20 may be caused to perform core temperature information generation in a wireless manner, for example.

The operations of position adjuster 304 and pusher 305 may be controlled by a jig controller provided in food hygiene management device 10, for example. The jig controller may control the operations of position adjuster 304 and pusher 305 to automatically perform the measurement of the core temperature when it is detected that food 200 has been put in the food placement region from the photograph data captured by photographic device 30, for example.

Further, it is possible to employ a configuration in which a plurality of pieces of food 200 is put on a conveyer such as a belt conveyor so as to be automatically carried to the food placement region, for example. In this case, the food placement region is provided in the middle of the conveyer, and the conveyer temporarily stops at the time when food 200 enters the food placement region. The jig controller of food hygiene management device 10 detects that food 200 has entered the food placement region from the photograph data of photographic device 30, and automatically measures the core temperature of food 200. When food hygiene management device 10 has completed the process up to the storage of the composite photograph data after the measurement of the core temperature, the conveyer carries food 200 whose food hygiene management process has been completed to the next step, and carries new food 200 into the food placement region. This configuration can also achieve complete automation of the food hygiene management process.

This application is entitled to and claims the benefit of Japanese Patent Application No. 2022-029910 filed on February 28, 2022, the disclosure each of which including the specification, drawings and abstract is incorporated herein by reference in its entirety.

### Industrial Applicability

The food hygiene management system of the present disclosure is suitable for hygiene management in food manufacturing processes.

### Reference Signs List

100 Food hygiene management system
10 Food hygiene management device
11 Core temperature acquirer
12 Photograph acquirer
13 Operation information acquirer
14 Image-capturing instructor
15 Combiner
16 Display information generator
17 Storage
18 Reference range DB
19 Determiner
110 Reader
111 Food information acquirer
20 Core temperature information generation device
21 Measurement input device
22 Needle
30 Photographic device
40 Display device
50 Input device
200 Food
300 Placement member
301 Food type image
302 Photographic device supporter
303 Core temperature information generation device supporter
304 Position adjuster
305 Pusher

## Claims

1. A food hygiene management device comprising:
a core temperature acquirer that acquires core temperature information representing a core temperature of food;
a photograph acquirer that acquires photograph data of the food; and
a combiner that generates composite photograph data that indicates the core temperature information, time information of a time when the core temperature is measured, and photograph data of the food.

2. The food hygiene management device according to claim 1, further comprising an image-capturing instructor that generates instruction information for instructing image-capturing of the food in response to acquisition of the core temperature information.

3. The food hygiene management device according to claim 1 or 2, wherein the core temperature acquirer acquires, as the core temperature information, a latest core temperature that is obtained when variation of the core temperature measured at a predetermined interval falls within a threshold value a predetermined number of consecutive times.

4. The food hygiene management device according to any one of claims 1 to 3, further comprising:
an input device that receives an operation of selecting a type of the food; and
a determiner that determines whether the core temperature acquired falls within a reference range that is set in advance for each type.

5. The food hygiene management device according to any one of claims 1 to 3, further comprising:
a reader that reads identification information representing a type of the food from the photograph data; and
a determiner that determines whether the core temperature acquired falls within a reference range that is set in advance for each type.

6. A food hygiene management system comprising:
a core temperature information generation device that generates core temperature information representing a core temperature of food;
a photographic device that takes a photograph of the food; and
a food hygiene management device that generates and stores composite photograph data that indicates the core temperature information, time information of a time when the core temperature is measured, and photograph data of the food.

7. The food hygiene management system according to claim 6, further comprising a photographic device supporter that supports the photographic device such that a food placement region where the food is placed falls within an image-capturing range of the photographic device, and that an image-capturing direction of the photographic device is tilted at a predetermined angle with respect to a horizontal plane.

8. The food hygiene management system according to claim 6 or 7, further comprising a core temperature information generation device supporter that supports the core temperature information generation device, and moves the core temperature information generation device to a position where the core temperature of the food is measurable.

9. A food hygiene management method that is executed by a computer, wherein the computer
acquires core temperature information representing a core temperature of food;
acquires photograph data of the food; and
generates composite photograph data that indicates the core temperature information, time information of a time when the core temperature is measured, and photograph data of the food.

10. A program that is executed by a computer that performs a food hygiene management process, wherein the program causes the computer to execute a procedure of
acquiring core temperature information representing a core temperature of food;
acquiring photograph data of the food; and
generating composite photograph data that indicates the core temperature information, time information of a time when the core temperature is measured, and photograph data of the food.
